# EUROPÄISCHE PATENTANMELDUNG

(11) **EP 2 204 667 A1**
(43) Veröffentlichungstag der Anmeldung: **07.07.2010**
(21) Anmeldenummer: 09174978.8
(22) Anmeldetag: 04.11.2009
(51) Int. Cl.: G01S 7/486, G01S 7/487, G01S 17/93

(54) **Optisches Messverfahren und Einrichtung für die Durchführung des Verfahrens**

(30) Priorität: 02.01.2009 DE 102009000007
(71) Anmelder: Robert Bosch GmbH, 70442 Stuttgart (DE)
(72) Erfinder: Merkel, Rudolf, 76297 Stutensee (DE); Zimmermann, Uwe, 71686 Remseck (DE)

(57) **Zusammenfassung**

Die Erfindung betrifft ein optisches Messverfahren für die Erfassung von Objekten mittels an den Objekten reflektierter Strahlungsimpulse. Bei dem Verfahren wird die Amplitude eines an einem Objekt reflektierten Strahlungsimpulses erfasst. DerAmplitudenwert wird in einem Zwischenspeicher C1, C2 zwischengespeichert. Eine Auswertung der Amplitude erfolgt in einer Impulspause zwischen zwei Strahlungsimpulsen. Weiterhin betrifft die Erfindung eine Einrichtung für die Durchführung des Verfahrens.

## Beschreibung

### Stand der Technik

Die Erfindung betrifft ein optisches Messverfahren nach dem Oberbegriff des Anspruchs 1. Weiterhin betrifft die Erfindung eine Einrichtung für die Durchführung des Messverfahrens nach dem Oberbegriff des Anspruchs 8. Das erfindungsgemäße Verfahren und die Einrichtung ermöglichen die Erfassung von Lage und Entfernung eines Objekts mittels eines von der Einrichtung ausgesandten und an dem Objekt reflektierten Strahlungsimpulses. Besonders vorteilhaft ist die Erfindung in einem Kraftfahrzeug einsetzbar, um Objekte zu erfassen, die sich in dem Fahrzeugumfeld befinden. Dadurch kann eine Klassifizierung von Objekten erreicht und die Möglichkeit geschaffen werden, gefährlichen Objekten auszuweichen.

Bekannt sind Verfahren zur Messung von Objektabständen mittels Lidarsystemen, zum Beispiel durch Pulslaufzeitmessung, Phasenmessung oder Zeitdehnungsverfahren. Nicht bekannt ist ein Verfahren, das optimal an die Verhältnisse eines Pulslaufzeitmessverfahrens angepasst ist. Dabei entstehen, bedingt durch Abkühlphasen der Pulslichtquelle, mit einem typischen Tastverhältnis von 1:1000 bei herkömmlichen Verfahren unter Verwendung teurer Analogdigitalwandler im Bereich von 100 MHz, sehr lange Totzeiten, während der der Analogdigitalwandler nicht ausgelastet ist.

### Offenbarung der Erfindung

Der Erfindung liegt die Aufgabe zugrunde, ein kostengünstiges Verfahren und eine kostengünstige Einrichtung für die Erfassung von Objekten mittels eines Pulslaufzeitmessverfahrens zu schaffen. Diese Aufgabe wird durch das in Anspruch 1 genannte Verfahren und die in Anspruch 8 genannte Einrichtung gelöst. Die Erfindung geht von der Erkenntnis aus, dass durch Erfassung des Spitzenwerts der Amplitude eines an einem Objekt reflektierten Strahlungsimpulses und dessen Zwischenspeicherung in einem Spitzenwertspeicher genügend Zeit bleibt, um das Signal zwischen zwei Messimpulsen zu analysieren und dadurch Lage und Entfernung eines Objekts zu erfassen. Dabei kann auch die insbesondere für den Einsatz in Fahrzeugen geforderte Schlechtwettereinsatzfähigkeit kostengünstig realisiert werden. Besonders vorteilhaft kann ein Schwellwert für die Amplitude vorgegeben werden. In einem Normalbetrieb der Einrichtung werden dadurch nur Objektechos ausgewertet, die stark genug sind, um sich über diesen Schwellwert hervorzuheben. In vorteilhafter Weise kann der Schwellwert jedoch auch variabel ausgestaltet werden. Dadurch kann in einem Kalibriermodus, nach Absenkung des Schwellwerts, auch noch ein reflektiertes Signal geringer Signalstärke erfasst werden, das von einem Objekt in bekannter Entfernung, insbesondere einem Fahrzeugteil, wie die Windschutzscheibe, reflektiert wird. Weitere Vorteile ergeben sich aus den Unteransprüchen, der Beschreibung und der Zeichnung.

Ausführungsbeispiele der Erfindung werden im Folgenden unter Bezug auf die Zeichnung näher erläutert. Dabei zeigt:
- Figur 1: ein Blockschaltbild einer erfindungsgemäßen Einrichtung;
- Figur 2: ein Signaldiagramm.

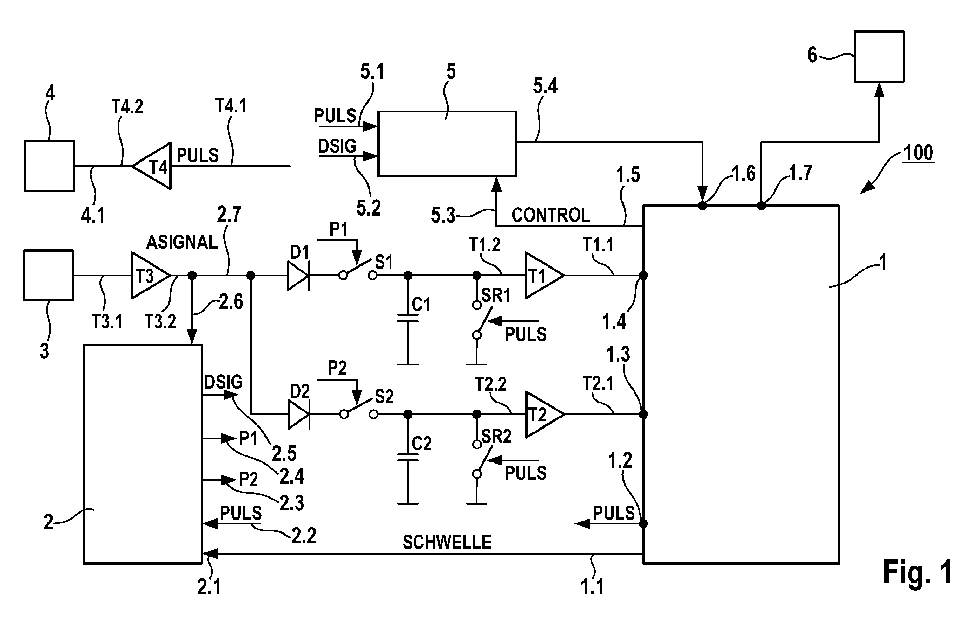

Figur 1 zeigt ein vereinfachtes Blockschaltbild einer erfindungsgemäßen Einrichtung 100 für die Durchführung des optischen Messverfahrens gemäß der Erfindung. Die Einrichtung 100 umfasst eine Recheneinheit (CPU) 1 mit einem mehrkanaligen Analog-Digital-Wandler (ADC), einem Pulsgenerator und einem Digital-Analog-Wandler (DAC). An einem Ausgangsanschluss 1.2 der Recheneinheit 1 wird das Ausgangssignal PULS des genannten Pulsgenerators bereitgestellt. Der Ausgangsanschluss 1.2 der Recheneinheit 1 ist mit einem Eingangsanschluss 2.2 eines Schwellwertkomparators 2 verbunden. Weiterhin ist der Ausgangsanschluss 1.2 der Recheneinheit 1 mit dem Eingangsanschluss T4.1 einer Treiberschaltung T4, dem Eingangsanschluss 5.1 einer Zeitmesseinrichtung 5 , einer Schalteinrichtung SR1 und einer Schalteinrichtung SR2 verbunden, so dass das Ausgangssignal PULS an den Anschlüssen der vorgenannten Komponenten bereitgestellt werden kann. Der Ausgangsanschluss T4.2 der Treiberschaltung T4 ist mit dem Eingangsanschluss 4.1 einer optischen Sendeeinrichtung 4 verbunden. Als optische Sendeeinrichtung wird vorzugsweise eine Laserdiode eingesetzt. Eine optische Empfangseinrichtung 3 ist mit dem Eingangsanschluss T3.1 einer Treiberschaltung T3 verbunden. Als optische Empfangseinrichtung 3 wird vorzugsweise eine Halbleiterdiode eingesetzt, deren Empfangscharakteristik auf die optische Sendeeinrichtung 4 abgestimmt ist. Der Ausgangsanschluss T3.2 der Treiberschaltung T3 ist einerseits mit einem Eingangsanschluss 2.6 des Schwellwertkomparators 2 und andererseits über eine Verbindungsleitung 2.7 mit den Anodenanschlüssen von zwei Dioden D1, D2 verbunden. Der Kathodenanschluss der ersten Diode D1 ist mit einem Pol einer Schalteinrichtung S1 verbunden. Der zweite Pol der Schalteinrichtung S1 ist mit dem Eingangsanschluss T1.2 einer Treiberschaltung T1 verbunden. Der Ausgangsanschluss T1.1 der Treiberschaltung T1 ist mit dem Eingangsanschluss 1.4 der Recheneinheit 1 verbunden. Der Eingangsanschluss T1.2 der Treiberschaltung T1 ist über einen Kondensator C1 mit dem Masseanschluss verbunden. Weiterhin ist der Eingangsanschluss T1.2 mit dem ersten Pol einer Schalteinrichtung SR1 verbunden. Der zweite Pol der Schalteinrichtung SR1 ist mit dem Masseanschluss verbunden. Ein Steuerelement der Schalteinrichtung SR1 ist mit dem Ausgangsanschluss 1.2 der Recheneinheit 1 verbunden und somit von dieser betätigbar. Ein Steuerelement der Schalteinrichtung S1 ist mit der Ausgangsleitung 2.4 des Schwellwertkomparators 2 verbunden. Der Kathodenanschluss der zweiten Diode D2 liegt über eine Schalteinrichtung S2 an dem Eingangsanschluss T2.2 einer Treiberschaltung T2, deren Ausgangsanschluss T2.1 mit dem Eingangsanschluss 1.3 der Recheneinheit 1 verbunden ist. Ein Steuerelement der Schalteinrichtung S2 ist mit dem Ausgangsanschluss 2.3 des Schwellwertkomparators 2 verbunden. Der Eingangsanschluss T2.2 der Treiberschaltung T2 liegt über einen Kondensator C2 an Masse. Weiterhin ist der Eingangsanschluss T2.2 der Treiberschaltung T2 mit einem ersten Pol einer Schalteinrichtung SR2 verbunden, deren zweiter Pol mit dem Masseanschluss verbunden ist. Ein Steuerelement der Schalteinrichtung SR2 ist mit dem Ausgangsanschluss 1.2 der Recheneinheit verbunden und von dieser steuerbar. Ein Ausgangsanschluss 1.1 der Recheneinheit 1 ist mit einem Eingangsanschluss 2.1 des Schwellwertkomparators 2 verbunden. Weiterhin ist ein Ausgangsanschluss 2.5 des Schwellwertkomparators 2 mit dem Eingangsanschluss 5.2 der Zeitmesseinrichtung 5 verbunden. Ein weiterer Eingangsanschluss 5.3 der Zeitmesseinrichtung 5 ist mit einem Ausgangsanschluss 1.5 der Recheneinheit 1 verbunden. Ein Ausgangsanschluss 5.4 der Zeitmesseinrichtung 5 ist mit dem Eingangsanschluss 1.6 der Recheneinheit 1 verbunden. Ein Ausgangsanschluss 1.7 ist mit einer hier nicht weiter erläuterten Signalverarbeitungseinrichtung 6 verbunden. Über diesen Ausgangsanschluss 1.7 werden der Signalverarbeitungseinrichtung 6 Informationen über den Abstand und die Rückstreuintensität von der Einrichtung 100 erfasster Objekte zur weiteren Verarbeitung zur Verfügung gestellt.

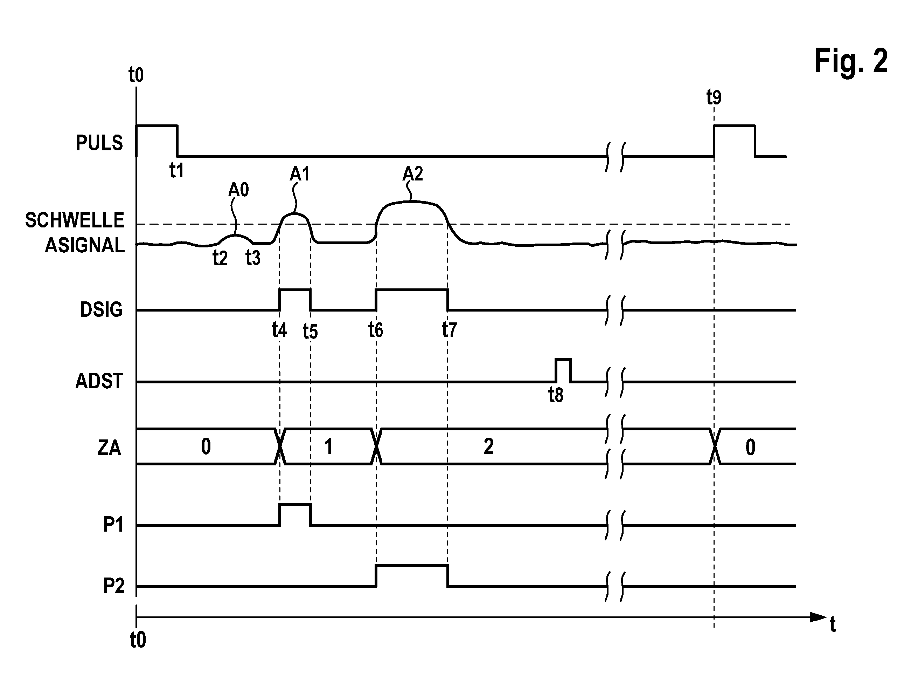

Im Folgenden wird die Funktionsweise der Einrichtung 100 auch unter Bezug auf das in Figur 2 dargestellte Signaldiagramm erläutert. Mit PULS ist ein Steuersignal bezeichnet, das von dem in der Recheneinheit 1 integrierten Pulsgenerator erzeugt wird und an dem Ausgangsanschluss 1.2 der Recheneinheit 1 bereitgestellt wird. Dieses Steuersignal wird über die Treiberschaltung T4 auch der optischen Sendeeinrichtung 4, vorzugsweise einer Laserdiode, zugeführt, die daraufhin einen Strahlungspuls aussendet. Das Steuersignal PULS mit der Breite t1-t0 liegt typischerweise im Bereich von etwa 10 ns. Das Steuersignal PULS liegt über den Eingangsanschluss 2.2 auch an dem Schwellwertkomparator 2 an, der zusätzlich auch noch eine Zählerschaltung ZA umfasst. Mit dem Steuersignal PULS wird die Zählerschaltung ZA auf den Wert Null gesetzt. Das Steuersignal PULS liegt über den Eingangsanschluss 5.1 auch an der Zeitmesseinrichtung 5 an. Mit dem Steuersignal PULS wird eine Zeitmessung durch die Zeitmesseinrichtung 5 gestartet. Weiterhin wird das Steuersignal PULS auch den Steuerelementen der Schalteinrichtungen SR1 und SR2 zugeführt. Dies hat zur Folge, dass die als Analogwertspeicher fungierenden Kondensatoren C1, C2 nach Masse kurzgeschlossen werden und die ihrer Ladung entsprechende Information damit gelöscht wird. Im Interesse einer möglichst hohen Lebensdauer der Laserdiode und einem möglichst wartungsfreien und daher kostengünstigen Betrieb der Einrichtung 100 wird im Anschluss an einen Steuerimpuls PULS eine üblicherweise von dem Hersteller der Laserdiode vorgeschriebene Abkühlphase benötigt. Bei einem typischerweise geforderten Tastverhältnis von etwa 1:1000 ergibt sich ein zeitlicher Abstand bis zum Beginn des nächsten Steuersignals PULS bei t9 von etwa 10µs. Eine derart lange Zykluszeit ist auch im Interesse einer möglichst hohen Augensicherheit und kann daher in der Praxis nicht wesentlich verkürzt werden. Wenn der durch Steuerung mittels des Steuersignals PULS von der optischen Sendeeinrichtung 4 erzeugte Strahlungsimpuls in dem Fahrzeugumfeld auf ein Objekt trifft und von diesem reflektiert wird, erfolgt, in Abhängigkeit von dem Reflexionsgrad des Objekts, eine Rückstreuung der Strahlung, die auf die optische Empfangseinrichtung 3 der Einrichtung 100 trifft. Als optische Empfangseinrichtung wird vorzugsweise eine Avalanche-Fotodiode mit einem nachgeschalteten Transimpedanzverstärker eingesetzt. Hierdurch wird die auftreffende, an dem Objekt reflektierte Strahlung in ein elektrisches Signal ASIGNAL umgesetzt, das an dem Ausgangsanschluss der Treiberschaltung T3 abgreifbar ist. Wenn das erfasste Objekt teilweise strahlungsdurchlässig ist, was beispielsweise auf Nebel, Rauch, Glas, usw. zutrifft, und sich im Strahlausbreitungsweg noch ein weiteres, ggf. auch teildurchlässiges Objekt befindet, wird auch dieses Objekt sich als erhöhter Amplitudenwert (Peak) in dem Signal ASIGNAL bemerkbar machen. In Figur 2 sind drei Signalbereiche mit erhöhten Amplitudenwerten und Amplitudenmaxima von A0, A1, A2, dargestellt. Die Anzahl der Objekte, die von der Einrichtung 100 erfasst und ausgewertet werden können (Mehrzielfähigkeit), kann ohne große Beschränkung der Systemleistung auf eine vergleichsweise geringe Zahl von typisch erweise ≤ 4 beschränkt werden. Eine weitere Besonderheit des betrachteten Messverfahrens ist darin zu sehen, dass der Abstand der in der Praxis interessierenden Objekte von der Einrichtung 100 relativ klein ist. Bei einem für die Praxis relevanten Abstandswert von beispielsweise 100m ergibt sich eine Laufzeit des Strahlungsimpulses von etwa 666 ns. Bis zu dem Beginn der nächsten Messung verstreichen daher mehr als 9 µs. Ein wesentlicher Vorteil der erfindungsgemäßen Lösung besteht darin, das erfasste Analogsignal ASIGNAL in geeigneter Weise einer Zwischenspeicherung zuzuführen und in der relativ langen Zeit bis zur Aussendung des nächsten Signals PULS auszuwerten. Dies wird im Folgenden näher erläutert, wobei zunächst wieder auf die Darstellung des Signals ASIGNAL in Figur 2 eingegangen wird. Das im Zeitintervall t2-t3 erfasste Signal hat eine vergleichsweise niedrige Maximalamplitude A0. Außerdem deutet die Lage des Impulses daraufhin, dass das erfasste Objekt relativ nah an der Einrichtung 100 liegt. Beispielsweise kann es sich dabei um die vor der Einrichtung 100 liegende Windschutzscheibe eines Fahrzeugs handeln. Da dieses Objekt im Normalbetrieb der Einrichtung 100 nicht von Interesse ist, kann es zweckmäßig durch einen geeigneten Schwellwert "SCHWELLE" unterdrückt werden. Wie in Figur 1 dargestellt ist, kann dieser Schwellwert von der Recheneinheit 1 an ihrem Ausgang 1.1 bereitgestellt und dem Eingang 2.1 des Schwellwertkomparators 2 zugeführt werden. Die beiden nächsten erfassten Objekte verursachen eine vergleichsweise starke Reflexion der Strahlung, was sich durch die entsprechend hohen Amplitudenwerte A1 und A2 in dem Signal ASIGNAL äußert. Da dies kritische Objekte in dem Bereich des Fahrzeugumfelds sein können, müssen diese Signale sorgfältig ausgewertet werden. Vorteilhaft wird dazu das analoge Signal ASIGNAL über den Eingangsanschluss 2.6 dem Schwellwertkomparator 2 zugeführt und von diesem in ein entsprechendes digitales Signal DSIG umgewandelt. Beginn und Ende dieser Signale bzw. die entsprechende Dauer der Signale von t4 bis t5 bzw. t6 bis t7 wird vorteilhaft von einer Zeitmesseinrichtung 5 erfasst und gespeichert. Dazu wird das von dem Schwellwertkomparator 2 an dem Ausgangsanschluss 2.5 bereitgestellte Signal DSIG dem Eingangsanschluss 5.2 der Zeitmesseinrichtung 5 zugeführt. Als Zeitmesseinrichtung eignet sich beispielsweise der kommerziell erhältliche Schaltkreis TDC502, der eine zeitliche Auflösung des Signals von ca. 45 ps ermöglicht. Mittels der Zählerschaltung ZA und weiteren in dem Schwellwertkomparator 2 enthaltenen Logikschaltungen werden weiterhin die Signale P1 und P2 erzeugt, die an den Ausgangsanschlüssen 2.4 und 2.3 des Schwellwertkomparators 2 bereitgestellt werden. Mittels der Signale P1 und P2 werden die Schaltelemente S1 und S2 gesteuert. Zum Zeitpunkt t8, das ist in dem beschriebenen Beispielsfall etwa 600 ns nach dem Zeitpunkt t0, ist die Erfassung des Signals ASIGNAL abgeschlossen mit dem Signal ADST (Analogdigitalwandlerstart) kann die Auswertung gestartet werden. Aus den erfassten Zeiten bzw. Zeitintervallen t4 - t0, t5 - t0, t6 - t0 und t7 - t0 lassen sich die Abstände erfasster Objekte von der Einrichtung 100 ermitteln. Weiterhin kann aus diesen Zeitwerten auch die Tiefe, das heißt, die Ausdehnung eines Objekts in Strahlausbreitungsrichtung, ermittelt werden. Die Amplitudenwerte A1 und A2 des Signals ASIGNAL werden vorteilhaft mit Spitzenwertspeichern erfasst. Dabei wird für jedes erwartete Ziel bzw. Zielecho ein derartiger Spitzenwertspeicher benötigt. Im vorliegenden Beispielsfall sind demzufolge zwei Spitzenwertspeicher vorgesehen. Als Spitzenwertspeicher dienen die Kondensatoren C1 und C2. Zum Zeitpunkt t8 kann ein beispielsweise in der Recheneinheit 1 integrierter Analogdigitalwandler ADC mit der Wandlung der in den Spitzenwertspeichern (Kondensatoren C1, C2) gespeicherten Spitzenwerte beginnen und die gewandelten Daten an eine Auswerteeinrichtung 6 weiterleiten. Zweckmäßig werden die Spitzenwertspeicher vor jeder neuen Messung, vorzugsweise bereits nach Abschluss der Analogdigitalwandlung, gelöscht. Im Folgenden wird beschrieben, wie die Speicherung des Spitzenwerts erfolgt. Dabei wird, beispielsweise, nur die Speicherung des Spitzenwerts der Amplitude A1 in dem Kondensator C1 betrachtet. Weiterhin werde unterstellt, dass es sich bei der Diode D1 um eine ideale Diode handelt, dass also dort kein weiterer Spannungsabfall auftritt. Durch Steuerung mittels des Signals P1 wird die Schalteinrichtung S1 zum Zeitpunkt t4 geschlossen. Dadurch fließt ein Ladestrom, der den Kondensator C1 bis zu einem der maximalen Amplitude A1 entsprechenden Ladungswert auflädt. Der danach der abnehmenden Amplitude entsprechende Spannungsabfall bis zum Zeitpunkt t5 wird sich durch die Diode D1 nicht auf die Spannung an dem Kondensator C1 auswirken. Das bedeutet, dass in dem Kondensator C1 ein der maximalen Amplitude A1 entsprechender Spannungswert gespeichert bleibt. Analog wird auch ein der Maximalamplitude A2 entsprechender Spannungswert in dem Kondensator C2 gespeichert. Da für die Praxis verfügbare Dioden keine idealen Kennwerte aufweisen, kann dies bei der Auswertung der gespeicherten Spitzenwerte berücksichtigt werden. Beispielsweise kann so berücksichtigt werden, dass die gespeicherten Spannungswerte A1, A2 um die Durchflussspannungen der Dioden D1, D2 niedriger sind. Um die Spannungen an den Kondensatoren C1, C2 möglichst schnell, nämlich entsprechend der Zeitkonstante RxC, auf die entsprechenden Amplitudenwerte bringen zu können, sollten die Kondensatoren C1, C2 möglichst klein sein. Weiterhin sollte der die Zeitkonstante bestimmende Widerstand R, der sich aus dem Ausgangswiderstand der Treiberschaltung T3, dem Durchlasswiderstand der Dioden D1, D2, und dem Widerstand der Schalteinrichtungen S1, S2 zusammensetzt, entsprechend klein gewählt werden. Zum Zeitpunkt t8 wird der von der Recheneinheit b1 gesteuerte Analogdigitalwandler ADC beginnen, die Spannungen an den Kondensatoren C1 und C2 zu messen und in entsprechende Digitalwerte umzuwandeln. Dabei verhindern die hochohmigen Eingangswiderstände der Treiberschaltungen T1, T2 ein vorzeitiges Entladen der Kondensatoren C12, C2. Neben dem bereits beschriebenen Speichern der Analogwerte werden durch die Zeitmesseinrichtung 5 auch die Zeitpunkte t4, t5, t6, t7 festgehalten und nach Erreichen des Zeitpunkts t8 von der Recheneinheit 1 ausgelesen und ausgewertet.

Wie bereits beschrieben, interessieren im Normalbetrieb der Einrichtung 100 nur Amplitudenwerte des Signals ASIGNAL, die den Schwellwert SCHWELLE überschreiten. Im vorliegenden Beispielsfall sind das die Amplitudenwerte A1 und A2, da die Amplitude A0 den Schwellwert SCHWELLE nicht überschreitet. In vorteilhafter Weiterbildung der Erfindung ist der Schwellwert SCHWELLE variabel ausgestaltet und beispielsweise durch die Recheneinheit 1 steuerbar. Durch ein entsprechendes Absenken des Schwellwerts SCHWELLE kann erreicht werden, dass auch die vergleichsweise niedrige Amplitude A0 des Signals ASIGNAL noch erfasst werden kann. Hierdurch ist vorteilhaft jederzeit eine Kalibrierung der Einrichtung möglich. Die Amplitude A0 beruht beispielsweise auf der Reflexion eines Strahlungsimpulses an der Windschutzscheibe eines Fahrzeugs, in dem die Einrichtung 100 angeordnet ist. Da der Abstand der Einrichtung 100 von der Windschutzscheibe bekannt und vorzugsweise in der Einrichtung 100 gespeichert ist, kann durch mindestens eine Messung und Auswertung des Signals ASIGNAL mit der Amplitude A0 die Einrichtung 100 kalibriert werden. Abweichungen infolge Temperaturdrift, Alterung von Bauelementen, Bauteiletoleranzen und dergleichen können so auf einfache Weise erfasst und entsprechend kompensiert werden.

Weiterhin kann ein Absenken des Schwellwerts SCHWELLE auch vorteilhaft vorgenommen werden, um auch noch weiter entfernt liegende Objekte erfassen zu können, die nur noch wenig Strahlung reflektieren.

## Patentansprüche

1. Optisches Messverfahren für die Erfassung von Objekten mittels an den Objekten reflektierter Strahlungsimpulse, **dadurch gekennzeichnet, dass** die Amplitude (A0, A1, A2) eines an einem Objekt reflektierten Strahlungsimpulses erfasst wird, dass der Wert der Amplitude (A0, A1, A2) in einem Zwischenspeicher (Kondensator C1, Kondensator C2) zwischengespeichert wird und dass eine Auswertung der Amplitude (A0, A1, A2) in einer Impulspause zwischen zwei Strahlungsimpulsen erfolgt.

2. Messverfahren nach einem der vorhergehenden Ansprüche, **dadurch gekennzeichnet, dass** ein Schwellwert (SCHWELLE) für die Amplituden (A0, A1, A2) vorgegeben wird und dass im Normalbetrieb nur Amplituden ausgewertet werden, die den Schwellwert (SCHWELLE) überschreiten.

3. Messverfahren nach einem der vorhergehenden Ansprüche, **dadurch gekennzeichnet, dass** der Schwellwert (SCHWELLE) verändert werden kann.

4. Messverfahren nach einem der vorhergehenden Ansprüche, **dadurch gekennzeichnet, dass** in einem Kalibriermodus der Schwellwert (SCHWELLE) derart abgesenkt wird, dass auch noch ein vergleichsweise niedriger Amplitudenwert (A0) erfasst werden kann, der auf die Reflexion eines Strahlungsimpulses an einem Bauteil eines Fahrzeugs, insbesondere an dessen Windschutzscheibe, zurückgeht.

5. Messverfahren nach einem der vorhergehenden Ansprüche, **dadurch gekennzeichnet, dass** Impulsbreite und Amplitude des an einem Objekt reflektierten Strahlungsimpulses erfasst werden und dass aus der Impulsbreite und der Amplitude auf die Tiefenausdehnung des Objekts und dessen Reflexionseigenschaften geschlossen wird.

6. Messverfahren nach einem der vorhergehenden Ansprüche, **dadurch gekennzeichnet, dass** die in analoger Form vorliegenden Signalwerte (ASIGNAL) in Digitalsignale (DSIG) umgewandelt werden.

7. Messverfahren nach einem der vorhergehenden Ansprüche, **dadurch gekennzeichnet, dass** aus den Digitalsignalen (DSIG) die Dauer der rückgestreuten Impulse abgeleitet wird.

8. Einrichtung (100) für die Durchführung eines Verfahrens nach einem der vorhergehenden Ansprüche, umfassend eine Sendeeinrichtung (4), eine Empfangseinrichtung (3), einen Schwellwertkomparator (2), eine Zeitmesseinrichtung (5), eine Auswerteeinrichtung (6) und eine Recheneinheit (1) für die Steuerung der Einrichtung (100).

9. Einrichtung nach einem der vorhergehenden Ansprüche, **gekennzeichnet durch** mindestens einen Spitzenwertspeicher für die Speicherung des Maximalwerts der Amplitude (A0, A1, A2) eines von der Einrichtung (100) empfangenen Strahlungsimpulses.

10. Einrichtung nach einem der vorhergehenden Ansprüche, **dadurch gekennzeichnet, dass** für jedes erwartete Impulsecho eines an einer Mehrzahl von Objekten reflektierten Strahlungsimpulses ein Spitzenwertspeicher vorgesehen ist.

11. Einrichtung nach einem der vorhergehenden Ansprüche, **dadurch gekennzeichnet, dass** Treiberschaltungen (T1, T2) vorgesehen sind, die zwischen den Ausgang eines Spitzenwertspeichers (Kondensator C1, C2) und einen Eingang der Recheneinheit (1) geschaltet sind.

12. Einrichtung nach einem der vorhergehenden Ansprüche, **dadurch gekennzeichnet, dass** eine Treiberschaltung (T3) mit dem Ausgangsanschluss (3.1) der Empfangseinrichtung (3) verbunden ist.

13. Einrichtung nach einem der vorhergehenden Ansprüche, **dadurch gekennzeichnet, dass** eine Treiberschaltung (T4) mit dem Eingangsanschluss der Sendeeinrichtung (4) verbunden ist.

14. Verwendung der Einrichtung nach einem der vorhergehenden Ansprüche in einem Fahrzeug zum Zwecke der Erfassung von Objekten in dem Umfeld des Fahrzeugs.
